# EUROPEAN PATENT APPLICATION

(11) **EP 1 505 807 A2**
(43) Date of publication of application: **09.02.2005**
(21) Application number: 04018026.7
(22) Date of filing: 29.07.2004
(51) Int. Cl.: H04M 1/663, H04M 1/57, H04M 3/436

(54) **Telephone, control method and telephone communication system for selectively rejecting incoming telephone calls**

(30) Priority: 05.08.2003 JP 2003286591
(71) Applicant: NEC CORPORATION, Tokyo (JP)
(72) Inventor: Igarashi, Katsuhito, Minato-ku Tokyo (JP)
(74) Representative: Glawe. Delfs. Moll

(57) **Abstract**

A telephone rejects an arrival of unwanted e-mails. If the telephone does not have a telephone number of an incoming call in a memory, it counts a ringing time interval of the incoming call. If the ringing time interval is shorter than a predetermined time interval, the telephone stores the telephone number of the incoming call as a telephone number whose incoming call is rejected. When a user inputs a telephone number for calling in the telephone, a telephone number whose incoming call is rej ected which corresponds with the inputted telephone number is automatically deleted from the memory section. The telephone number whose incoming call is rej ected may be stored in a database connected to a communication network. In that case, a server accesses the database and disconnects the call line coming from the telephone number whose incoming call is rejected.

## Description

### BACKGROUND OF THE INVENTION

### 1. Field of the Invention

The present invention relates to a telephone, control method thereof, and a telephone communication system, and more particularly to a function to reject an arrival of a call from a designated telephone number at a telephone.

### 2. Description of the Related Art

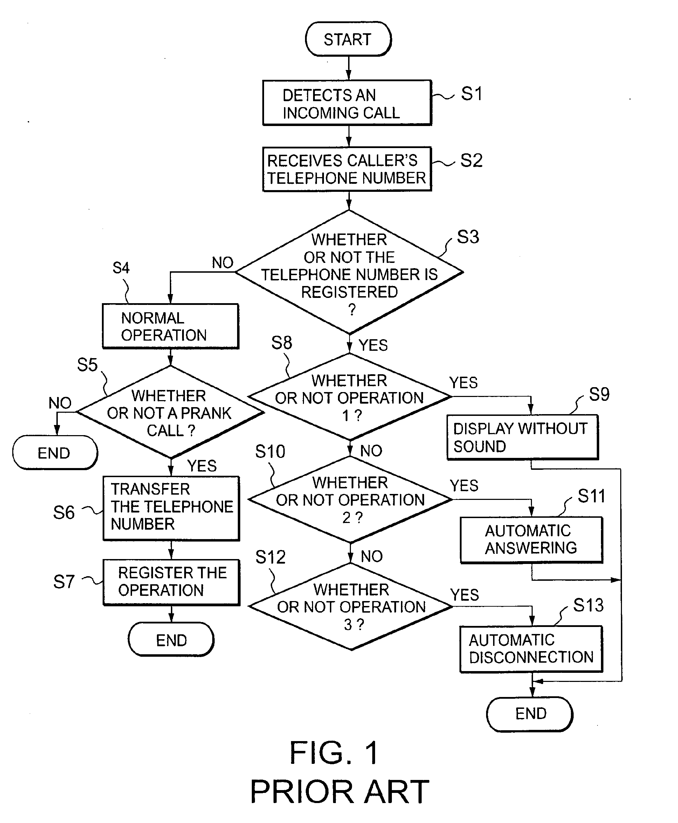

Recently, quite a few e-mails which users do not want to receive actually arrive at telephones, particularly mobile phones, and this has become problematic. In response to such a problem, telephone service companies offer various services about unwanted incoming E-mails. Additionally, telephones which are capable of rejecting a call from a designated telephone number are also marketed. As an incoming call processing operation control method to reject arrivals of unwanted e-mails, Japanese Patent Laid-Open Hei No. 10 (1998) -042036, for example, discloses a control method as shown in FIG. 1. Its incoming call processing operation control method is as follows: a telephone detects an incoming call (S1) , and then receives the telephone number of the caller (S2): The telephone checks whether or not the caller's number is registered in the memory section as a telephone number whose incoming call is rejected (S3) . If the telephone number has been registered (YES in S3) , an incoming call processing operation registered for this designated number is selected (S8, S10, S12) . As a result, any one of incoming call processing operations is performed. That is, any one of displaying without sound (S9) , automatic answering (S11), or automatic disconnection (S13) is selected. If the telephone number has not been registered, and a specified code is received at the end of communication (S5), the telephone transfers the unregistered telephone number to a processing operations registration memory (S6) to set and register an incoming call processing operation for this telephone number (S7). Japanese Patent Laid-Open Publication Hei No. 7 (1995)-066868 discloses a technology in which a telephone switchboard prohibits an incoming call that a callee does not want to receive, and cancels such prohibition after a predetermined elapsed time. However, in order to use this service of incoming call rejection at the switchboard, a telephone user must manually register in advance caller's telephone number from which an unwanted e-mail was sent.

### SUMMARY OF THE INVENTION

A telephone according to the present invention rejects the receiving of a call from a specified telephone number. The telephone has a telephone number memory section, a telephone number identification section, and a ringing time interval determination section. By these elements, the telephone stores the specified telephone number, and detects the telephone number of the incoming call as well as the ringing time interval. In addition, the telephone has a telephone number collating section and a telephone number processing section. These elements compare a telephone number inputted to the telephone with telephone numbers whose incoming calls are rejected, and allows the incoming call from the inputted telephone numbers to arrive. The telephone has a telephone number registration section, which registers specified telephone numbers with a short ringing time interval as telephone numbers whose incoming calls are rejected.

A control method according to the present invention has following steps . That is, the steps include: storing a telephone number whose incoming calls are rejected in the telephone; storing a telephone number to which a call is made in the telephone; determining whether or not a telephone number for calling matches up with any of the telephone numbers whose incoming calls are rejected; and, if both numbers match up, said telephone number is set as a telephone number whose incoming call is allowed.

A telephone communication system has a telephone, a telephone switchboard for connecting to a network, and a server that controls the telephone switchboard to prohibit calls from a specified telephone number from arriving at the telephone. The server receives a telephone number sent from a telephone, and, if the received telephone number matches up with any of the specified telephone numbers, the call from said telephone is allowed arriving.

The server according to the present invention is connected to a network including a telephone switchboard. The server' has a memory section that stores a telephone number. When a caller' s telephone number matches up with any of the stored telephone numbers in the memory section, the server controls the telephone switchboard to prohibit the call from arriving at the telephone. Further, the server receives the telephone number from the telephone, and deletes the telephone number in the memory section that matches up with the received telephone number.

In the present invention, if users store in the telephone a telephone number to dial, the prohibition of incoming call is cancelled even though the incoming call from this telephone number is prohibited from arriving.

### BRIEF DESCRIPTION OF THE DRAWING

The above and other objects, features, and advantages of the present invention will become apparent from the following detailed description when taken with the accompanying drawings in which:
FIG. 1 illustrates an example of an incoming call processing operation control method for a telephone.
FIG. 2A and FIG. 2B are block diagrams of an embodiment of a telephone according to the present invention.
FIG. 3 illustrates an example of call receiving operations of a telephone according to the present invention.
FIG. 4 illustrates an example of processing operations of a telephone according to the present invention.
FIG. 5 illustrates an example of a telephone communication system according to the present invention.
FIG. 6 illustrates an example of a telephone communication system operation according to the present invention.

### DETAILED DESCRIPTION OF THE PREFERRED EMBODIMENTS

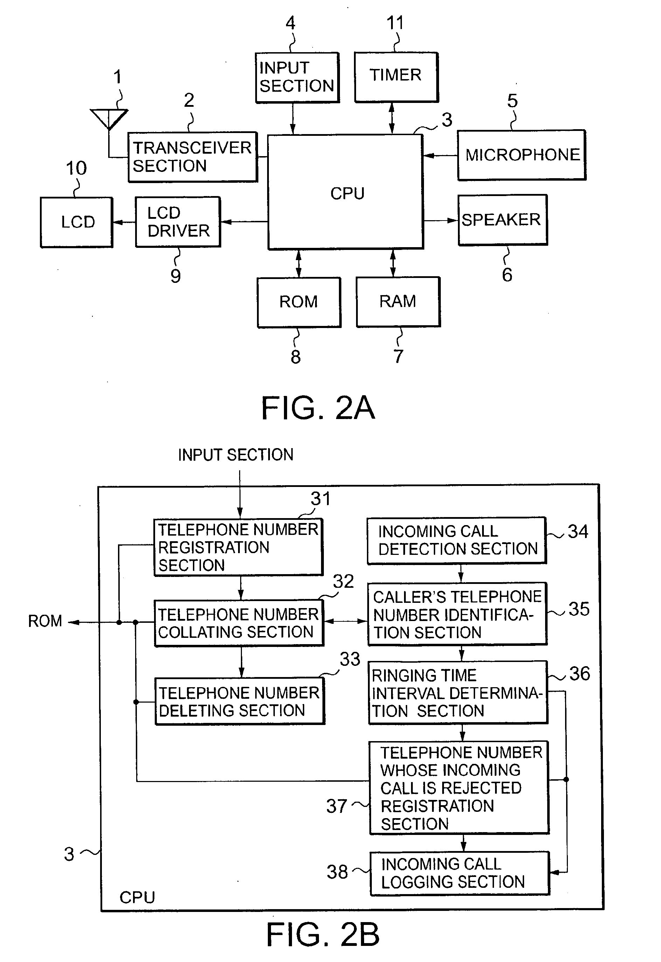

Preferred embodiments of a telephone according to the present invention will be described hereinafter. Referring to FIG. 2A, a telephone according to the present invention comprises an antenna 1, a transceiver section 2, a CPU 3, an input section 4, a microphone 5, a speaker 6, memory sections 7, 8, an LCD driver 9, an LCD 10, and a timer 11. The transceiver section 2 sends and receives radio signals to and from a base station via the antenna 1 in accordance with the control by the CPU 3. The CPU 3 sends out display information to the LCD driver 9 to display desired data on the LCD 10. The timer-11 counts the ringing time interval of an incoming call. The memory section 7 is a random access memory (RAM) for storing information from the base station. The memory section 8 is a read only memory (ROM) for storing programs, character fonts, and the like, for controlling the telephone processing operation. The memory section 8 is, for example, an electrically erasable and programmable ROM (EEPROM), and can store a list of telephone numbers whose incoming calls are allowed and a list of telephone numbers whose incoming calls are rejected.

FIG. 2B illustrates functions possessed by the CPU 3. The CPU 3 has a call detection section 34, a caller's telephone number identification section 35, a ringing time interval determination section 36, a registration section 37 for registering a telephone number whose incoming call is rejected, and an incoming call logging section 38. The call detection section 34 detects an incoming call. The caller's telephone number identification section 35 identifies a caller's telephone number among the information detected by the call detection section 34. The ringing time interval determination section 36 determines a call whose ringing time interval is smaller than a predetermined time interval to be a subject whose incoming call is rejected. If the memory section 8 does not contain the telephone number of a call which is determined by the ringing time interval determination section 36 to be one of those which are subjects whose incoming calls are rejected, the registration section 37 registers such telephone number as one whose incoming call is rejected. The incoming call logging section 38 registers the registration history of a telephone number whose incoming calls are rejected and the registration history of normal incoming calls.

The CPU 3 further includes a telephone number registration section 31, a telephone number collating section 32, and a telephone number deleting section 33. The telephone number registration section 31 registers a telephone number inputted by a user into a list of telephone numbers whose incoming calls are allowed in the memory section 8. The telephone number collating section 32 determines whether or not the telephone number registered by the telephone number registration section 31 is in the list of telephone numbers whose incoming calls are rejected. If the telephone number collating section 32 determines that said telephone number is contained in the list of telephone numbers whose incoming calls are rejected, the telephone number deleting section 33 deletes the telephone number from said list of telephone numbers whose incoming calls are rejected.

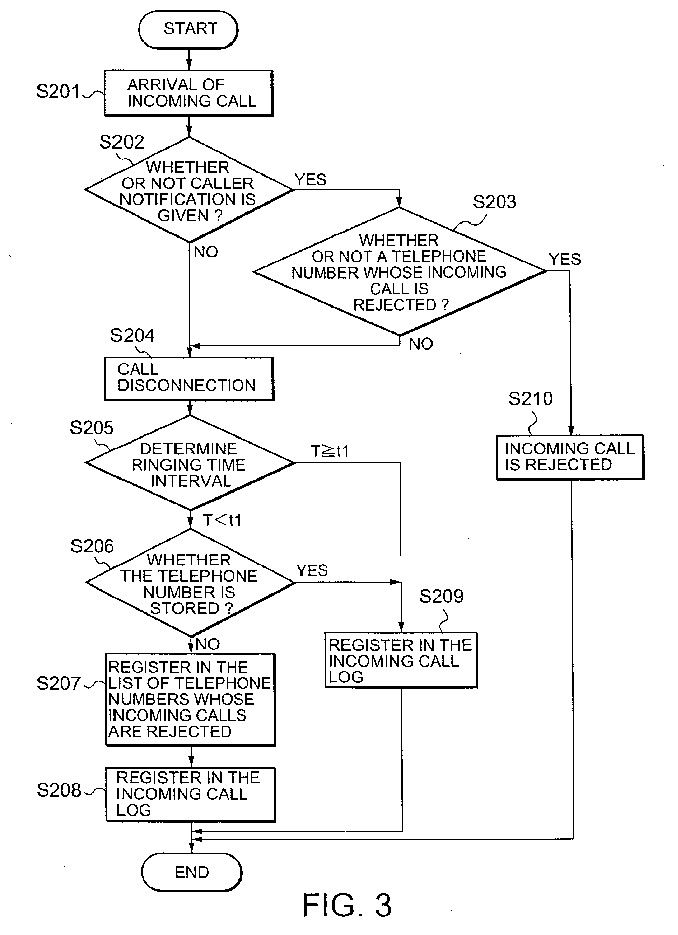

FIG. 3 is a flow chart showing an example of the operation of a telephone according to the present invention. The CPU 3 of the telephone detects an incoming call (S201). The CPU 3 determines whether or not the received data contains a caller notification (S202). If the CPU 3 receives the caller notification, a determination is made as to whether or not the caller's telephone number is contained in the list of telephone numbers whose incoming calls are rejected in the memory section 8 (S203). If the list contains the same telephone number, the incoming call rejection operation is performed (S210). If the caller notification is not coming (NO in S202) , or if the telephone number of the call is not present in said list (NO in S203), the CPU 3 counts the elapsed time up to the point when the call is disconnected (S204) . When the call is disconnected, the CPU 3 compares the ringing time interval (T) with a predetermined threshold value (t1) (S205). If T is equal to or greater than t1, the CPU 3 registers necessary items in the incoming call log as usual (S209). If T is smaller than t1, the CPU 3 determines whether or not the telephone number of the call is same as one stored in the memory section 8 (S206) . If the telephone number of the call is not stored in the memory section 8, the CPU 3 adds the telephone number to the list of telephone numbers whose incoming calls are rej ected in the memory section 8 (S207) Then, the CPU 3 registers necessary items in the incoming call log as well as the fact that the telephone number is added to the list of telephone numbers whose incoming calls are rejected (S208). By aforesaid operations, it becomes possible that telephone numbers of calls whose ringing time interval is short are automatically registered in the list of telephone numbers. whose incoming calls are rejected.

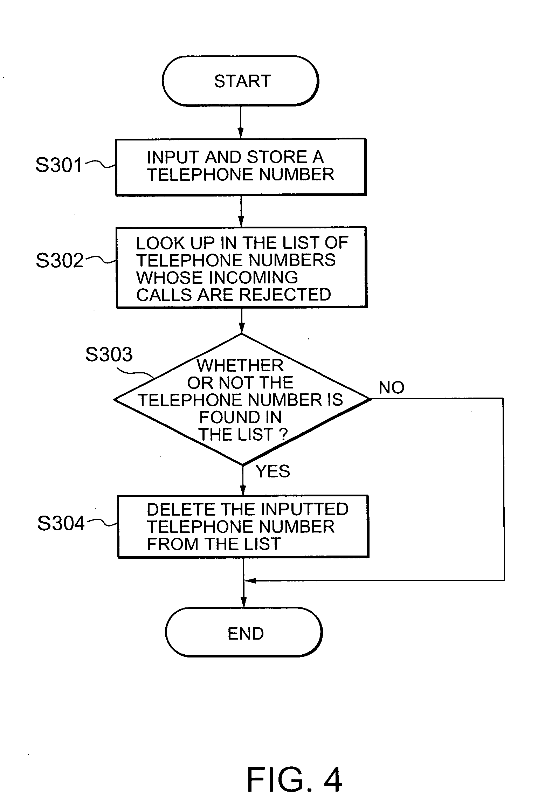

Referring to FIG. 4, an example of an operation to delete a telephone number from a telephone list in the memory section 8 is shown. A user inputs a telephone number whose calls are to be allowed by means of the input section 4 and stores the telephone number in the list of telephone numbers whose calls are to be allowed in the memory section 8 (S301). The CPU 3 looks up the list. of telephone numbers whose incoming calls are rejected in the memory section (S302) . The CPU 3 determines whether or not the inputted telephone number is present in the list of telephone numbers whose incoming calls are rejected (S303). If the telephone number is contained in the list (YES in S303), the telephone number is deleted from the telephone number list of telephone numbers whose incoming calls are rejected (S304). If the telephone number is not contained in the list of telephone numbers whose incoming calls are rejected (NO in S303), the processing operation is ended. When a user registers a telephone number in the list of telephone numbers whose incoming calls are to be allowed, the same telephone number as this telephone number in the list of telephone numbers whose incoming calls are rejected is always deleted automatically. The user does not need to perform a new operation for deletion.

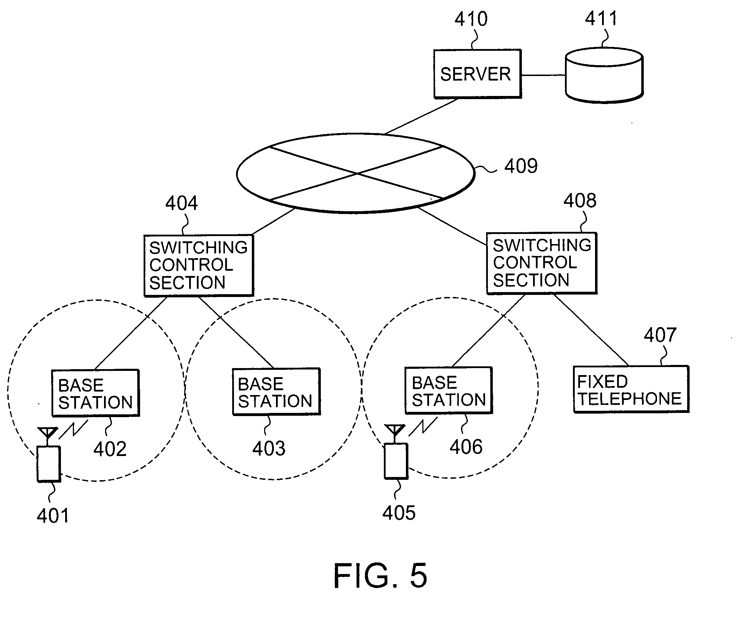

Referring to FIG. 5, an example of a telephone communication system according to the present invention is shown. A mobile phone 401 is located in a radio communication area of a base station 402. Base stations 402, 403 are connected with a switching control section 404 (e.g. a telephone switchboard), and a base station 406 and a fixed telephone 407 are connected with a switching control section 408. The switching control sections 404, 408 are connected with a public phone network 409. The switching control sections 404, 408 handle connecting processing operations and others for calls from the mobile phones 401, 405 and the fixed telephone terminal 407. A server 410 is connected with public networks such as telephone network, internet, ISDN and the like. The server 410 is connected with a database 411, and controls the data input to and output from the database 411 as well as data accumulation. The database 411 accumulates data such as a list of telephone numbers whose incoming calls are rejected corresponding to respective telephone numbers of mobile telephones. The server 410 stores in the database 411 telephone numbers whose incoming calls are rejected, which are sent from the fixed telephone terminal 407. The list of telephone numbers whose incoming calls are rej ected, which is stored in the database 411, connected to the server 410 can be formulated individually for respective telephones, and further can be formulated as a list shared by all telephones.

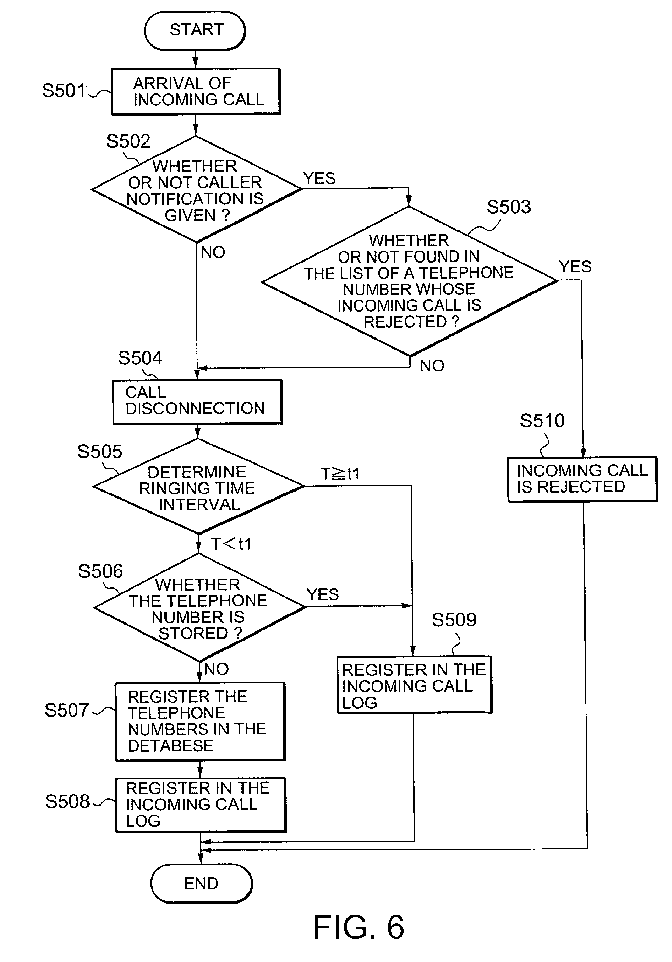

Referring to FIG. 6, an example of processing operation of the afore-described telephone communication system is shown. In this system, the list of telephone numbers whose incoming calls are rejected is stored in the database 411. The server 410 controls the switching control sections 404, 408, to disconnect the line before an incoming call which is to be rej ected actually arrives at a telephone. First, the CPU 3 of a mobile phone detects an incoming call (S501). The CPU 3 determines whether or not received data contains a caller notification (S502). If the CPU 3 received the caller notification, a determination is made as to whether or not caller's telephone number is contained in the list of telephone numbers whose incoming calls are rejected in the memory section 8 (S503). If the list contains the same number, the incoming call rejection operation is performed (S510) . If the caller notification is not coming (No in S502), or if the telephone number of the call is not present in said list (NO in S503) , the CPU 3 counts the elapsed time up to the point when the call is disconnected (S504) . When the incoming call is disconnected, the CPU 3 compares the ringing time interval (T) with a predetermined threshold value (t1) (5505). If T is equal to or greater than t1, the CPU 3 registers necessary items in the incoming call log as usual (S509) . If T is smaller than t1, the CPU 3 determines whether or not the telephone number of the termination call is same as one stored in the memory section 8 (S506) . If the telephone number of the incoming call is not stored in the memory section 8, the CPU 3 transmits the identification information and the telephone number of this call to the server 410. Upon receipt of a signal from mobile phone, the server 410 adds the telephone number of the call in the list of telephone numbers whose incoming calls are rejected in the database 411 (S507). Then, the CPU 3 registers necessary items in the incoming call log as well as the fact that the telephone number is added to the list of telephone numbers whose incoming calls are rejected (S508). By aforesaid operations, it becomes possible that the list of telephone numbers whose incoming calls are rejected is shared and used by respective telephones.

Next, an example of an operation to delete a telephone number whose incoming call is rejected which is registered in the database 411 will now be described. A user performs, with a mobile phone, the operation to register telephone numbers for calling. When the user wants to delete a telephone number stored in the database 411, the user has a preprogrammed menu displayed on a display of the mobile phone, and selects a pertinent item. Based on such operation, the mobile phone starts up the server 410. The server 410 receives the identification information and the telephone number to be deleted which are transmitted from the mobile phone, and looks up the list of telephone numbers whose incoming calls are rejected in the database 411. When the telephone number is located in the list of telephone numbers whose incoming calls are rejected, the server 410 deletes the telephone number from the list. Therefore, when the user inputs a telephone number for calling in user's own mobile phone, the same number is simultaneously and automatically deleted from the list of telephone numbers whose incoming calls are rejected in the database 411.

While the present invention has been described in connection with certain preferred embodiments, it is to be understood that the subject matter encompassed by the present invention is not limited to those specific embodiments. On the contrary, it is intended to include all alternatives, modifications, and equivalents as can be included within the spirit and scope of the following claims.

## Claims

1. A telephone that rejects a call from a predetermined telephone number, the telephone comprising:
a telephone number memory section that stores a telephone number whose incoming call is allowed and a telephone number whose incoming call is rejected;
a telephone number identification section that identifies a caller's telephone number;
a ringing time interval determination section that compares a ringing time interval of an incoming call with a predetermined time interval;
a telephone number registration section that registers the telephone number whose incoming call is rejected;
a telephone number collating section that collates an inputted telephone number for calling with a telephone number whose incoming call is rejected; and
a telephone number processing section that turns the telephone number whose incoming call is rejected, which corresponds with the inputted telephone number for calling, to a telephone number whose incoming call is allowed,
wherein said telephone number registration section stores a telephone number of an incoming call as a telephone number whose incoming call is rejected, in case where the ringing time interval of the incoming call is shorter than the predetermined time interval and the telephone number of the incoming call does not match up with any of the telephone numbers whose incoming calls are allowed.

2. The telephone according to claim 1,
wherein the telephone number processing section deletes the telephone number whose incoming call is rejected, which corresponds with the inputted telephone number for calling, from the list of a telephone number whose incoming call is rejected, said list being stored in the telephone number memory section.

3. A control method for a telephone, said control method comprising steps of:
storing a telephone number whose incoming call is rejected in the telephone;
inputting a telephone number for calling in the telephone;
determining whether or not the telephone number for calling corresponds with the telephone number whose incoming call is rejected; and
setting the telephone number as a telephone number whose incoming call is allowed if there is a correspondence between the telephone numbers.

4. The control method according to claim 3, said control method further comprising:
comparing a ringing time interval of an incoming call with a predetermined time interval; and
storing a telephone number of the incoming call as a telephone number whose incoming call is rejected if the ringing time interval is shorter than a predetermined time interval and the telephone number of the incoming call is different from the telephone number for calling.

5. A telephone communication system, comprising:
a telephone;
a telephone switchboard that is connected with a network; and
a server that controls the telephone switchboard to prohibit a call from a predetermined telephone number to arrive at the telephone,
wherein said server allows the arrival of an incoming call from a telephone number if the telephone number for calling transmitted from the telephone corresponds with the predetermined telephone number.

6. The telephone communication system according to claim 5,
wherein the server allows an incoming call to the telephone from a telephone number that the telephone transmitted to the server as the telephone number for calling.

7. The telephone communication system according to claim 5,
wherein the server comprises a memory section that stores the predetermined telephone number, and controls the telephone switchboard to prohibit the arrival of an incoming call at the telephone if a caller's telephone number corresponds with any of the predetermined telephone numbers stored in the memory section.

8. The telephone communication system according to claim 5,
wherein the telephone transmits the telephone number of the incoming call to the server as a telephone number whose incoming call is rejected if a ringing time interval of the incoming call is shorter than a predetermined time interval and the telephone number of the incoming call does not correspond with a telephone number whose incoming call is allowed which is stored in the telephone, and
wherein the server stores a telephone number whose incoming call is rejected in the memory section.

9. A server connected with a network including a telephone switchboard,
the server comprising a memory section for storing a telephone number,
wherein the server controls the telephone switchboard to prohibit an arrival of an incoming call at a telephone from a caller's telephone number if the caller's telephone number corresponds with the telephone number stored in said memory section, and
wherein the server, upon receiving the telephone number from the telephone, deletes the telephone number in the memory, which corresponds with the received telephone number.
